Europäisches Patentamt

European Patent Office

Office européen des brevets

(11) Veröffentlichungsnummer: **0 226 034**
**A2**

(12) # EUROPÄISCHE PATENTANMELDUNG

(21) Anmeldenummer: **86115590.1**

(22) Anmeldetag: **11.11.86**

(51) Int. Cl.⁴: **G 06 K 7/10**

(30) Priorität: **22.11.85 DE 3541351**

(43) Veröffentlichungstag der Anmeldung:
**24.06.87 Patentblatt 87/26**

(84) Benannte Vertragsstaaten:
**BE CH DE ES FR GB IT LI LU NL SE**

(71) Anmelder: **GÜTERMANN & CO.,**
**AKTIENGESELLSCHAFT**
**Postfach 8023 Claridenstrasse 25**
**CH-8023 Zürich(CH)**

(72) Erfinder: **Kraske, Bernhard**
**Juliusstrasse 2**
**D-7809 Gutach(DE)**

(74) Vertreter: **Riebling, Günter, Dr.**
**Patentanwälte Dr.-Ing., Dipl.-Ing., Ing.(grad) Günter**
**Riebling Dr.-Ing., Dipl.-Ing. Peter Riebling Rennerle 10**
**Postfach 3160**
**D-8990 Lindau (Bodensee)(DE)**

(54) Optische Sende- und Empfangsvorrichtung zum berührungsfreien Lesen von Zeichen.

(57) Die optische Sende- und Empfangsvorrichtung zum berührungsfreien Lesen von Zeichen, insbesondere Markierungen und Barcodes, besteht aus einer in einem Kunststoffkörper angeordneten Sendediode, die einen schräg gerichteten Sendestrahl auf eine außerhalb des Kunststoffkörpers liegende Referenzfläche richtet, wobei im Winkel zur Sendediode im Kunststoffkörper eine Empfangsdiode angeordnet ist, deren Empfangsstrahl ebenfalls auf die Referenzfläche gerichtet ist. Statt der Anordnung einer Glasoptik sind einfache rechteckförmige Schlitzblenden vorhanden und der Sende- und Empfangsstrahl schneiden sich in einem einzigen Schnittpunkt im Bereich einer Referenzfläche.

FIG 1

----------------------------------------------------------------

Optische Sende- und Empfangsvorrichtung zum berührungsfreien Lesen von Zeichen

----------------------------------------------------------------

Die Erfindung betrifft eine optische Sende- und Empfangsvorrichtung zum berührungsfreien Lesen von Zeichen nach dem Oberbegriff des Patentanspruchs 1.

Eine derartige Sende- und Empfangsvorrichtung ist aus der US-PS 4 079 261 und im wesentlichen aus der US-Zeitschrift, IBM Technical Disclosures Bulletin, Vol., 14, Nr. 1, Juni 1971, Seite 58,59, bekannt. Nachteilig ist es hierbei, daß die Größe der rechteckförmigen Aussparung noch im Bereich der Gehäuseabmessungen von der Sende- bzw. Empfangsdiode liegt. Dadurch gehen fertigungstechnische Ungenauigkeiten im Randbereich der meist als Massenartikel vorliegenden optischen Bauelemente in den optischen Erfassungsvorgang mit ein, was zu Streuungen an der Referenzfläche oder zu Laufzeitverzerrungen an der Empfangsdiode führen kann, wodurch die Genauigkeit und Funktionssicherheit der Sende- und Empfangsvorrichtung eingeschränkt ist. Weiterhin können sich nachteilig an der Innenfläche der rechteckförmigen Aussparungen Strahlreflektionen ausbilden, die den Ablesevorgang in Bezug auf die Ablesegeschwindigkeit bei kleinen zu erkennenden Zeichen beeinträchtigen können.Nachteilig ist es auch, daß die rechteckförmigen Aussparungen bei den bekannten Vorrichtungen an der Oberfläche des Kunststoffkörpers im Vergleich zueinander verschieden große Durchtrittsöffnungen bilden. Dadurch können Verschmutzungen eine nachteilige einseitige Beeinträchtigung des Strahlengangs bewirken, was in Bezug auf den Ablesevorgang nur langsam wirkende Beeinträchtigungen hervorruf, die oftmals zu spät bemerkt werden.

Aus der FR-PS 25 55 337 ist es bekannt, in den Strahlengang der Sende- und Empfangsdiode einen Rahmen mit einer optischen Schlitzblende vorzuschalten. Nachteilig ist es hier jedoch, daß sich an der den den optischen Bauelementen zugewandten Seite des Rahmens Reflektionen ausbilden, welche die Ablesegenauigkeit beeinträchtigen können.

Weiterhin besteht die Gefahr, daß sich der Rahmen mit der Schlitzblende im Strahlengang verschieben kann.

Der Erfindung liegt die Aufgabe zugrunde, eine Vorrichtung der eingangs genannten Art so weiterzubilden, daß eine erhöhte Funktionssicherheit und große Ablesegenauigkeit bei niedrigen Herstellungskosten erreicht wird.

Zur Lösung der gestellten Aufgabe ist die Erfindung dadurch gekennzeichnet, daß die rechteckförmigen Aussparungen in Form von optischen Schlitzblenden an der Oberfläche des Kunststoffkörpers symmetrisch gleich lang und parallel zueinander angeordnet sind und eine Breite von etwa 0,4 mm aufweisen, wobei die optisch empfindlichen Punkte von Sende- und Empfangsdiode gleich weit entfernt von der zugeordneten optischen Schlitzblende angeordnet sind.

Merkmal der vorliegenden Erfindung ist es, daß die Schlitze schon in der Nähe der Oberflächen von Sende- und Empfangsdiode ausgehen und an der Oberfläche des Kunststoffkörpers optische Schlitzblenden bilden, die Streuungen und Reflektionen im Inneren des Kunststoffkörpers sowie Laufzeitverzerrungen unterdrücken. Störungen, die von außen her auf den Strahlengang einwirken könnten, sind weitgehend symmetriert und die optischen Schlitzblenden klein gehalten. Es ist auch erreicht worden, daß Unterschiede in der optischen Funktion der Bauteile auf den Strahlengang nur geringfügig Einfluß haben, so daß Bauteile unterschiedlich optischen Verhaltens, insbesondere auch nach einem Auswechseln, verwendet werden können.

Ein weiteres Merkmal der Erfindung ist, daß Sende- und Empfangsstrahl sich in einem einzigen Schnittpunkt im Bereich der Referenzfläche schneiden, wodurch eine bessere Auflösung erreicht wird. Die Anordnung von rechteckförmigen Schlitzblenden im Vergleich zu runden Lochblenden hat den weiteren Vorteil, daß die Beleuchtungsstärke wesentlich höher ist als bei entsprechenden Lochblenden, wenn es gilt, strichförmige Zeichen zu erkennen, wie es insbesondere bei Barcodes der Fall ist.

Mit Schlitzblenden können Drucke geringerer Qualität sicherer als mit Lochblenden gelesen werden, da kleine Druckfehler ausgeglichen werden können.

Weitere Merkmale der Erfindung sind Gegenstand der übrigen Unteransprüche.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:

Figur 1 Schnitt durch eine Sende- und Empfangsvorrichtung nach der Erfindung in Höhe der Linie I-I in Figur 2,

Figur 2: Draufsicht auf die Vorrichtung nach Figur 1,

Figur 3: schematisiert das elektrische Schaltbild für eine Auswerte-Elektronik.

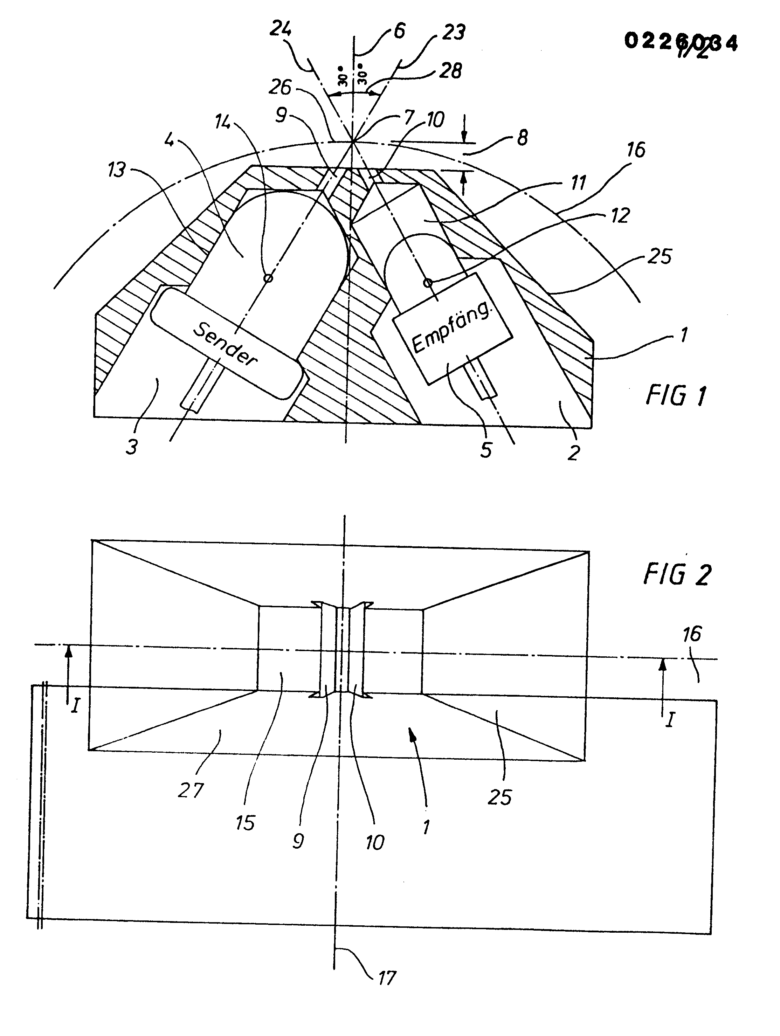

Figur 1 zeigt einen Kunststoffkörper 1, in dem zwei Ausnehmungen 2,3 schräg zueinander in gleichem Winkel in Richtung j zu einer vertikalen Achse 6 eingearbeitet sind. Die Längsachse durch jeweils eine Ausnehmung 2,3 bildet den Sendestrahl 23 für die in der Ausnehmung 3 eingesetzte Sendediode 4 und den Empfangsstrahl 24 für die in die Ausnehmung 2 eingesetzte Empfangsdiode 5.

Die beiden Dioden 4,5 sitzen formschlüssig in zugeordneten Ausnehmungen 11,13 verringerten Durchmessers, welche die Ausnehmungen 2, 3 im Kunststoffkörper 1 fortsetzen.

Die Sendediode 4 erzeugt den Sendestrahl 23, der mit der Vertikalen 6 einen Schnittpunkt 7 außerhalb und oberhalb des Kunststoffkörpers 1 bildet.

Die Längsachse der Ausnehmung 2,11 ist so gerichtet, daß die in der Ausnehmung 11 sitzende Empfangsdiode 5 auf einem Empfangsstrahl 24 sitzt, der durch den Schnittpunkt 7 hindurch geht. Der Schnittpunkt 7 weist hierbei einen Abstand 8 von der Fläche 15 des Kunststoffköreprs 1 auf.

Wichtig ist, daß der optisch empfindliche Punkt 12 der Empfangsdiode 5 relativ weit von der rechteckförmigen Schlitzblende 10 entfernt liegt, so daß von diesem Punkt 12 aus gesehen in Richtung zur Schlitzblende 10 der auszulesende Bereich relativ schmal gehalten ist und dadurch die Auflösung hoch ist.

Die Sendediode 4 liegt mit ihrem optisch empfindlichen Punkt 14 möglichst dicht an der Schlitzblende 9, um eine hohe Leuchtdichte am Ort des Schnittpunktes 7 zu erzeugen. Durch die dazwischengeschaltete Schlitzblende 9 wird jedoch nur ein schmaler Sendestrahl 23 am Schnittpunkt 7 erzeugt.

Die beiden Schlitzblenden 9,10 sind etwa rechteckförmig und im Bereich einer relativ schmalen Fläche 15 des Kunststoffkörpers 1 angeordnet. Von dieser Fläche 15 aus gehen abgeschrägte Seitenflächen 25,27 aus, so daß die Fläche 15 die Spitze eines Kegelstumpfes bildet.

Sinn dieser Maßnahme ist, zu erreichen, daß dicht neben der einen Seitenkante der Fläche 15 ein Distanzrad 16 angeordnet werden kann, welches in der Drehachse 17 drehbar gelagert ist.

Der Außenumfang des Distanzrades 16 liegt im Bereich des Schnittpunktes 7, wobei das Distanzrad auf der zu lesenden Referenzfläche 26 abrollt. Damit ist sichergestellt, daß der Kunststoffkörper 1 stets einen gleichbleibenden Abstand 8 von der Referenzfläche 26 mit dem Schnittpunkt 7 aufweist.

Es wird bevorzugt, wenn Sende- und Empfangsstrahl 23,24 jeweils einen Winkel 28 von 30° in Bezug zur Vertikalen 6 bilden.

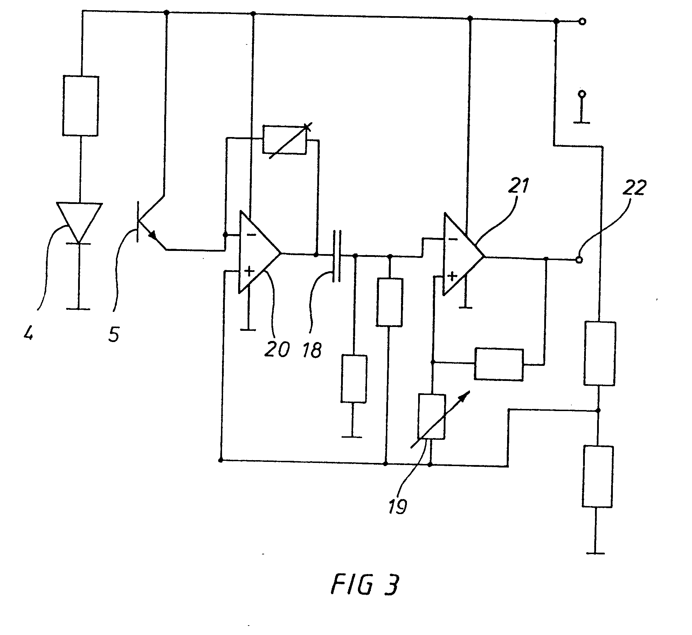

Die Figur 3 zeigt schematisiert eine elektrische Auswerteschaltung, wobei die Sendediode 4 ein kontinuierliches Licht aussendet. Es wird hierbei bevorzugt, wenn die Sendediode 4 als eine ein grünes Licht emittierende Leuchtdiode ausgebildet ist.

Die Empfangsdiode 5 liegt am einen Eingang eines Verstärkers 20 an, dessen Ausgangssignal über den Kondensator 18 differenziert wird. Dieses differenzierte Signal wird an den Eingang eines Schmitt-Triggers angelegt, an dessen Ausgang 22 ein digitales Pulssignal ansteht. Die Schaltwelle des Schmitt-Triggers ist über das Potentiometer 19 einstellbar.

Mit der beschriebenen Leseanordnung wird also eine kostengünstige, relativ verschmutzungsunanfällige und hochauflösende Anordnung geschaffen, mit der es bei einer Schlitzbreite der Schlitzblenden 9,10 von etwa 0,4 mm möglich ist, eine Auflösung von 0,2 mm zu erreichen. D.h., es können Strichcodes gelesen werden, die 0,4 mm breit sind und zwischen denen ein gegenseitiger Abstand von ebenfalls 0,4 mm besteht.

Hierbei ist vorausgesetzt, daß der Abstand 8 etwa 0,5 bis 0,7 mm beträgt.

Patentansprüche

1. Optische Sende- und Empfangsvorrichtung zum berührungsfreien Lesen von Zeichen, bestehend aus einem Kunststoffkörper, der in seinem Inneren im Winkel zueinander eine Sende- und Empfangsdiode aufweist, die optisch über rechteckförmige Aussparungen des Kunststoffkörpers auf eine außerhalb liegende Referenzfläche gerichtet sind, mit einem drehbar gelagerten Distanzreich am Kunststoffkörper zur Einhaltung eines gleichbleibenden Abstandes in Bezug auf die Referenzfläche, d a d u r c h

g e k e n n z e i c h n e t , daß die rechteckförmigen Aussparungen in Form von optischen Schlitzblenden (9,10) an der Oberfläche des Kunststoffkörpers symmetrisch gleich lang und parallel zueinander angeordnet sind und eine Breite von etwa 0,4 mm aufweisen, wobei die optisch empfindlichen Punkte (12,14) von Sende- und Empfangsdiode (4,5) gleich weit entfernt von der zugeordneten optischen Schlitzblende (9,10) angeordnet sind.

2. Sende- und Empfangsvorrichtung nach Anspruch 1, d a d u r c h g e k e n n z e i c h n e t, daß der Sende- und Empfangsstrahl (23,24) jeweils einen Winkel von etwa 30° zur Vertikalen (6) bilden.

3. Sende- und Empfangsvorrichtung nach Anspruch 1, d a d u r c h g e k e n n z e i c h n e t, daß die Sendediode (4) eine ein grünes Licht emittierende Leuchtdiode ist.

4. Sende- und Empfangsvorrichtung nach einem der Ansprüche 1 - 5, d a d u r c h g e k e n n z e i c h n e t, daß der Abstand (8) des Schnittpunktes (7) zur Oberkante der Schlitzblende (9,10) etwa 0,5 bis 0,7 mm beträgt.

24 6 23
28
26
30° 30°
14 9 7 10
4 8
13 16
11
12
25
Sender Empfäng.
1
3 5 2

FIG 1

FIG 2

16

I

I

27 15 9 10 1 25

17

FIG 3